# EUROPÄISCHE PATENTSCHRIFT

(11) **EP 0 399 607 B1**
(45) Veröffentlichungstag und Bekanntmachung des Hinweises auf die Patenterteilung: **01.03.1995**
(21) Anmeldenummer: 90201275.6
(22) Anmeldetag: 21.05.1990
(51) Int. Cl.: G11B 27/30, G11B 27/17, G11B 27/34

(54) **System zum Auswerten von Markierungen**
System for detecting markings
Système de détection de marquages

(30) Priorität: 26.05.1989 AT 1276/89
(43) Veröffentlichungstag der Anmeldung: 28.11.1990
(73) Patentinhaber: Philips Electronics N.V., 5621 BA Eindhoven (NL)
(72) Erfinder: Schönthaler, Günter, NL-5656 AA Eindhoven (NL); Schranz, Hans, NL-5656 AA Eindhoven (NL)
(74) Vertreter: van der Kruk, Willem Leonardus

(56) Entgegenhaltungen:
- EP-A- 0 110 483
- EP-A- 0 364 041
- DE-A- 2 906 836
- FR-A- 2 431 784
- US-A- 4 377 826
- US-A- 4 384 308

## Beschreibung

Die Erfindung betrifft ein System zum Auswerten von Markierungen, die je aus mindestens einem Markiersignal mit einer vorgegebenen Frequenz bestehen und die gemeinsam mit Informationen entsprechenden Informationssignalen auf einem Magnetband aufgezeichnet sind, das zwischen einem Abwickelkern und einem Aufwickelkern verläuft und das beim Aufzeichnen ausschließlich über den hierbei mit konstanter Drehzahl angetriebenen Aufwickelkern angetrieben wird, und die bestimmte Stellen der Informationen kennzeichnen, das einen Abwickeldorn und einen Aufwickeldorn zum Antreiben des Abwickelkernes und des Aufwickelkernes, mindestens einen Magnetkopf zum Wiedergeben der auf gezeichneten Signale und eine Frequenzvergleichseinrichtung zum Vergleichen der jeweiligen Frequenz der mit dem Magnetkopf wiedergegebenen, der Frequenzvergleichseinrichtung zugeführten Signale mit einer Referenzfrequenz aufweist, die bei Erfüllung einer vorgegebenen Vergleichsbedingung ein das Vorliegen einer Markierung signalisierendes Signal abgibt.

Ein solches System ist aus einem im Handel erhältlichen Diktiergerät für in Kassetten untergebrachte Magnetbänder bekannt. Mit diesem Gerät können von einem Benutzer diktierten Diktaten entsprechende Sprachsignale auf einem Magnetband aufgezeichnet werden. Dabei hat der Benutzer zusätzlich die Möglichkeit, Markierungen auf dem Magnetband aufzuzeichnen, die bestimmte Stellen der Diktate kennzeichnen, beispielsweise das Ende eines Diktates oder eine Diktatstelle, an der eine Korrektur des Diktates oder eine Einfügung in das Diktat gewünscht wird. Eine Markierung zur Kennzeichnung des Endes eines Diktates besteht dabei aus einem im wesentlichen sinusförmigen Markiersignal mit einer Frequenz von 40 Hz, das am Ende eines Diktates nach den Sprachsignalen in derselben Spur auf dem Magnetband aufgezeichnet wird. Eine Markierung zur Kennzeichnung einer zu korrigierenden Diktatstelle besteht dabei aus dem im wesentlichen sinusförmigen Markiersignal mit der Frequenz von 40 Hz und einem weiteren im wesentlichen sinusförmigen Markiersignal mit einer Frequenz von 1500 Hz, die beide an der zu korrigierenden Diktatstelle anstelle der Sprachsignale in derselben Spur auf dem Magnetband aufgezeichnet werden. Um diese Markierungen und damit die mit denselben markierten Stellen der Diktate auffinden zu können, weist das bekannte Gerät das eingangs angeführte System zum Auswerten der auf dem Magnetband aufgezeichneten Markierungen auf, wobei das Vorliegen einer Markierung an sich durch Detektieren des in allen Markierungen enthaltenen aufgezeichneten Markiersignales mit der Frequenz von 40 Hz erfolgt.

Bei dem bekannten Gerät erfolgt beim Aufzeichnen der Diktate und der Markierungen der Antrieb des Magnetbandes ausschließlich über den Aufwickelkern, der hiebei vom Aufwickeldorn mit einer konstanten ersten Drehzahl angetrieben wird. Beim Auswerten der Markierungen erfolgt der Antrieb des Magnetbandes ebenfalls ausschließlich über den Aufwickelkern, der hiebei aber vom Aufwickeldorn mit einer konstanten zweiten Drehzahl angetrieben wird, die einen zwanzigfach höheren Wert als die erste Drehzahl aufweist. Hiedurch wird das Magnetband beim Auswerten zwanzigmal schneller angetrieben als beim Aufzeichnen, wodurch aufgezeichnete Markierungen rasch aufgefunden werden können. Aufgrund dieser zwanzigfach höheren Drehzahl kommt es beim Auswerten der Markierungen zu einer Frequenztransponierung der aufgezeichneten Markiersignale, so daß die beim Auswerten mit einem Magnetkopf wiedergegebenen Markiersignale einen zwanzigfach höheren Frequenzwert aufweisen. Da der Antrieb des Magnetbandes sowohl beim Aufzeichnen als auch beim Auswerten der Markierungen über den jeweils mit konstanter Drehzahl angetriebenen Aufwickelkern erfolgt, bleibt diese Frequenztransponierung über die gesamte Länge des Magnetbandes gleich. Dies bedeutet, daß beispielsweise das aufgezeichnete Markiersignal mit der Frequenz von 40 Hz, das in allen Markierungen enthalten ist, unabhängig von der Stelle, an der es auf dem Magnetband aufgezeichnet ist, beim Auswerten stets als frequenztransponiertes Markiersignal mit einer Frequenz von 800 Hz wiedergegeben wird. Das Vorliegen einer Markierung an sich wird beim bekannten System durch Feststellen des Auftretens des frequenztransponierten wiedergegebenen Markiersignales mit der Frequenz von 800 Hz erkannt, wofür das bekannte System als Frequenzvergleichseinrichtung eine eine fixe mittlere Durchlaßfrequenz von 800 Hz aufweisende Filterschaltung aufweist, deren mittlere Durchlaßfrequenz die Referenzfrequenz bildet, mit der die jeweilige Frequenz der mit dem Magnetkopf wiedergegebenen, durch Sprachsignale und Markiersignale gebildeten Signale verglichen wird, und die bei Frequenzgleichheit, also wenn ein frequenztransponiertes Markiersignal mit der Frequenz von 800 Hz mit dem Magnetkopf wiedergegeben wird, an ihrem Ausgang ein das Vorliegen einer Markierung signalisierendes Signal abgibt, das zum Ansteuern einer Abschalteinrichtung für den Bandantrieb verwendet wird. Eine Auswertung der Markierungen bei einer sich über die Gesamtlänge des Magnetbandes ändernden Frequenztransponierung, wie dies der Fall ist, wenn beim Auswerten der Markierungen der Aufwickelkern nicht mit einer konstanten, sondern mit einer sich ändernden Drehzahl oder der Abwickelkern mit einer konstanten oder variablen Drehzahl angetrieben wird, ist mit dem bekannten System mit einer eine fixe mittlere Durchlaßfrequenz aufweisenden Filterschaltung als Frequenzvergleichseinrichtung nicht möglich, weil bei einer sich ändernden Frequenztransponierung sich die Frequenz des wiedergegebenen frequenztransponierten Markiersignales ändert, jedoch die die Referenzfrequenz bildende mittlere Durchlaßfrequenz der Filterschaltung unverändert bleibt.

US-A- 4 377 826 beschreibt ein Magnetbandgerät, welches im Aufnahmebetrieb das Magnetband mit konstanter Bandgeschwindigkeit antreibt und Markierungssignale bestimmter Frequenz aufzeichnen kann. Um die Markierungssignale frequenzmäßig auch bei schnellem Suchlauf erkennen zu können, werden die reproduzierten Markierungssignale im schnellen Suchlauf mit dem Ausgangssignal eines mit der Abwickelspule gekoppelten Drehzahlgebers verglichen. Dabei werden jedoch die Markierungssignale und die Ausgangssignale des Drehzahlgebers nicht unabhängig von Antriebsweise und Wickeldurchmesser der gleichen Frequenztransponierung unterworfen.

Die Erfindung hat sich zur Aufgabe gestellt, die vorstehend angeführte Einschränkung zu beseitigen und bei einem System der eingangs angeführten Gattung mit einfachen Mitteln zu erreichen, daß eine Auswertung der Markierungen auch bei einer sich ändernden Frequenztransponierung der aufgezeichneten Markiersignale möglich ist. Hierfür ist die Erfindung dadurch gekennzeichnet, daß mit dem Aufwickeldorn ein Drehzahlgeber gekoppelt ist, der ein Drehzahlsignal mit einer der Drehzahl des Aufwickelkernes proportionalen Frequenz abgibt, und daß das Drehzahlsignal der Frequenzvergleichseinrichtung zugeführt wird, in der die Frequenz des Drehzahlsignales die Referenzfrequenz bildet und die die jeweilige Frequenz des Drehzahlsignales mit der jeweiligen Frequenz der mit dem Magnetkopf wiedergegebenen Signale vergleicht. Auf diese Weise ist erreicht, daß beim Auswerten der Markierungen die jeweilige Frequenz der mit dem Magnetkopf wiedergegebenen Signale mit einer der jeweiligen Drehzahl des Aufwickelkernes entsprechenden Referenzfrequenz verglichen wird, die unabhängig von der Art und Weise, wie das Magnetband angetrieben wird, derselben Frequenztransponierung unterworfen wird, wie die Frequenz der aufgezeichneten Markiersignale, so daß die Frequenztransponierung keinen Einfluß auf den Frequenzvergleich der beiden Frequenzen hat. Hierdurch ist somit eine von der Frequenztransponierung unabhängige Auswertung der Markierungen erreicht, so daß das Magnetband beim Auswerten der Markierungen vorteilhafterweise auf jede beliebige Weise angetrieben werden kann, also beispielsweise auch durch Antreiben des Abwickelkernes mit konstanter oder variabler Drehzahl oder durch Antreiben des Aufwickelkernes mit konstanter oder variabler Drehzahl.

Bei einem erfindungsgemäßen System kann die Frequenzvergleichseinrichtung beispielsweise zwei Frequenz/Spannungs-Wandler aufweisen, von denen einem das Drehzahlsignal und dem anderen die mit dem Magnetkopf wiedergegebenen Signale zugeführt werden und die entsprechend der Frequenz der ihnen zugeführten Signale Ausgangsspannungen liefern, die in einer Spannungskomparatorschaltung zum Erkennen des Vorliegens einer Markierung ausgewertet werden. Als vorteilhaft hat sich aber erwiesen, wenn die Frequenzvergleichseinrichtung mit einem Mikroprozessor gebildet ist, der zum Vergleichen der jeweiligen Frequenz des Drehzahlsignales mit der jeweiligen Frequenz der mit dem Magnetkopf wiedergegebenen Signale die jeweilige Periodendauer des Drehzahlsignales und die jeweilige Periodendauer der mit dem Magnetkopf wiedergegebenen Signale ermittelt und danach die beiden Periodendauern gemäß einer vorgegebenen Vergleichsbedingung für diese beiden Periodendauern vergleicht und bei Erfüllung dieser Vergleichsbedingung das das Vorliegen einer Markierung signalisierende Signal abgibt. Auf diese Weise ist eine besonders einfache und preisgünstige Ausbildung erreicht, bei der vorteilhafterweise ein zur Realisierung einer Vielzahl von anderen Funktionen vorgesehener Mikroprozessor zusätzlich als Frequenzvergleichseinrichtung ausgenützt wird.

Der Mikroprozessor kann die jeweilige Periodendauer des Drehzahlsignales und die jeweilige Periodendauer der mit dem Magnetkopf wiedergegebenen Signale unmittelbar miteinander vergleichen. Als besonders vorteilhaft hat sich aber erwiesen, wenn der Mikroprozessor aus der ermittelten Periodendauer des Drehzahlsignales ein Toleranzfenster mit einem unteren Periodendauergrenzwert und einem oberen Periodendauergrenzwert errechnet und die vorgegebene Vergleichsbedingung so festgelegt ist, daß die ermittelte jeweilige Periodendauer der mit dem Magnetkopf wiedergegebenen Signale innerhalb dieser beiden Periodendauergrenzwerte liegen muß. Ein solches System ist vorteilhafterweise gegenüber Toleranzen des Drehzahlgebers und Toleranzen der Frequenz der wiedergegebenen Markiersignale unempfindlich.

Weiters hat sich dabei als vorteilhaft erwiesen, wenn der Mikroprozessor nur bei mehrmaliger Erfüllung der vorgegebenen Vergleichsbedingung für die beiden Periodendauern das das Vorliegen einer Markierung signalisierende Signal abgibt. Ein solches System ist vorteilhafterweise gegenüber kurzzeitig im Wiedergabesignalweg des Magnetkopfes auftretenden Störsignalen, die eine im Frequenzbereich der wiedergegebenen Markiersignale liegende Frequenz aufweisen, unempfindlich.

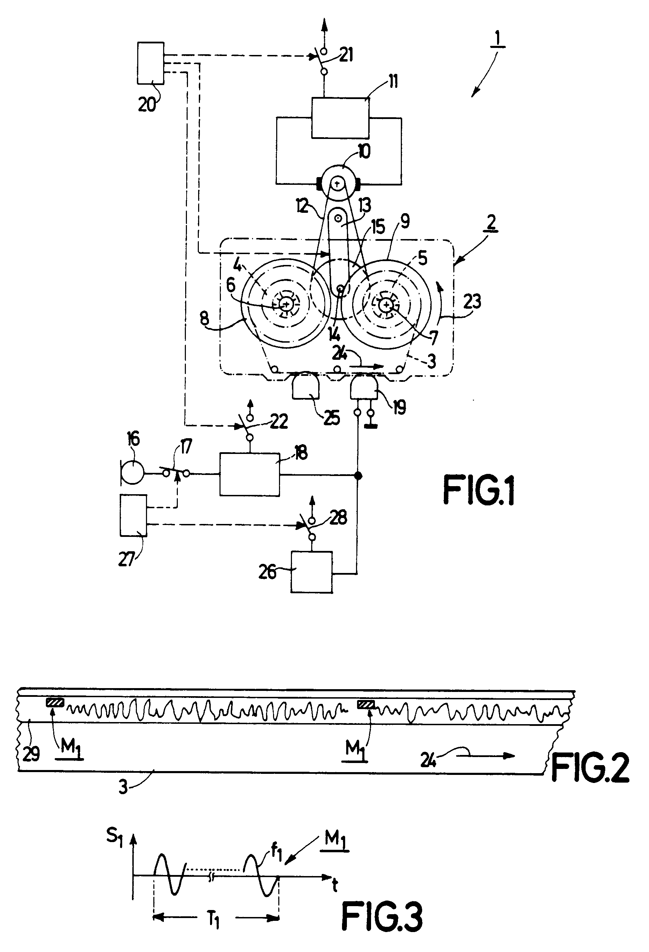

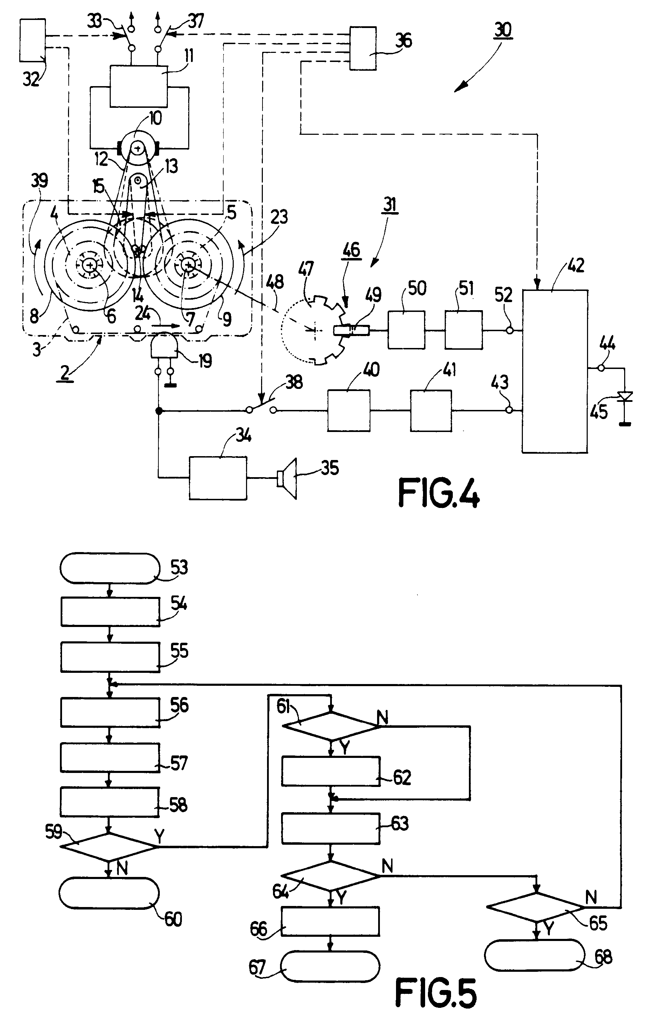

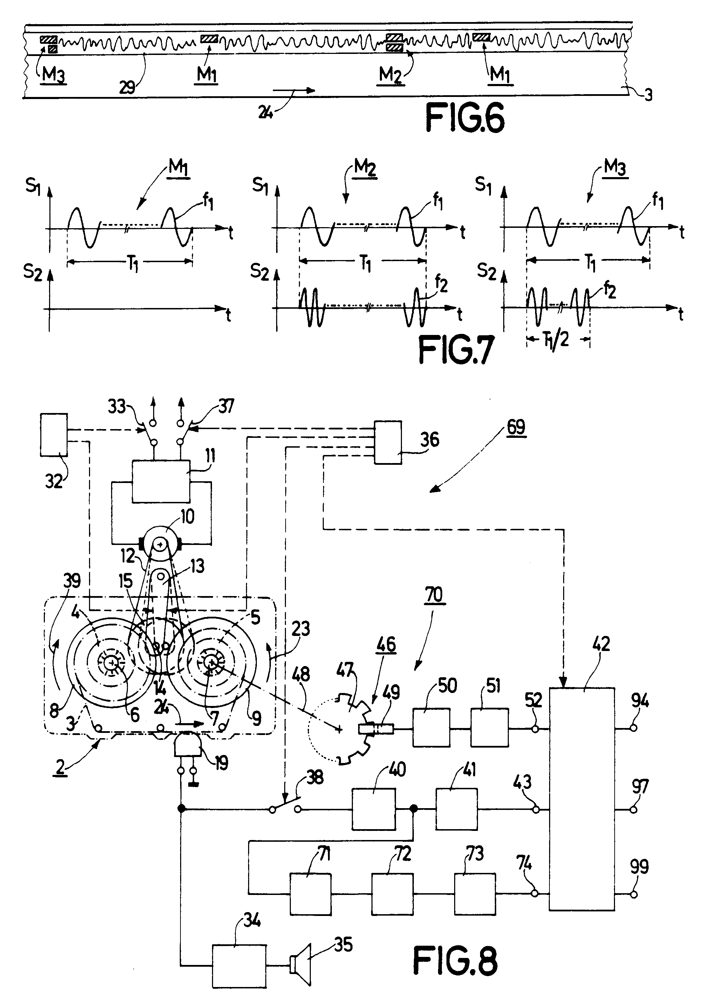

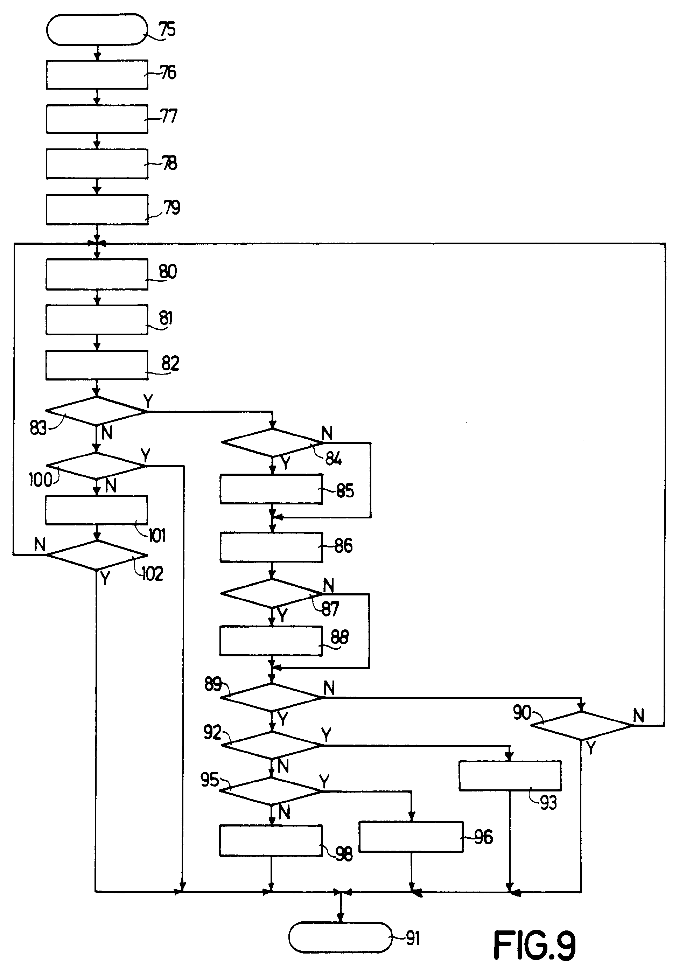

Die Erfindung wird im folgenden anhand von zwei Ausführungsbeispielen, auf die sie jedoch nicht beschränkt sein soll, näher beschrieben. Die Fig.1 zeigt schematisch ein Diktiergerät zum Aufzeichnen von Diktaten und Markierungen, die aus einem einzigen Markiersignal mit einer vorgegebenen Frequenz bestehen, auf einem in einer Kassette untergebrachten Magnetband. Die Fig.2 zeigt schematisch ein Magnetband, auf dem mit einem Gerät gemäß Fig.1 Diktate und Markierungen aufgezeichnet wurden. Die Fig.3 zeigt schematisch den Signalverlauf des Markiersignales, das eine Markierung, wie sie auf dem Magnetband gemäß Fig.2 aufgezeichnet ist, bildet. Die Fig.4 zeigt schematisch ein Diktiergerät, das ein erfindungsgemäßes System zum Auswerten der mit einem Gerät gemäß Fig.1 aufgezeichneten Markierungen aufweist und einen Mikroprozessor enthält. Die Fig.5 zeigt ein Flußdiagramm eines Programmablaufes, der im Mikroprozessor des Gerätes gemäß Fig.4 zum Auswerten der Markierungen abgearbeitet wird. Die Fig.6 zeigt schematisch ein Magnetband, auf dem mit einem nicht separat dargestellten, in seinem Aufbau dem Gerät gemäß Fig. 1 entsprechenden Gerät Diktate und Markierungen aufgezeichnet sind, wobei hier drei unterschiedliche Markierungen auf dem Magnetband aufgezeichnet sind. Die Fig.7 zeigt schematisch die Signalzusammensetzung der auf dem Magnetband gemäß Fig.6 aufgezeichneten drei unterschiedlichen Markierungen. Die Fig.8 zeigt ein Diktiergerät, das ein weiteres erfindungsgemäßes System zum Auswerten der drei unterschiedlichen Markierungen gemäß Fig.7 aufweist und einen Mikroprozessor enthält. Die Fig.9 zeigt ein Flußdiagramm eines Programmablaufes, der im Mikroprozessor des Gerätes gemäß Fig.8 zum Auswerten der Markierungen abgearbeitet wird.

Die Fig.1 zeigt schematisch einen Teil eines Diktiergerätes 1, das beispielsweise als in der Hand haltbares Taschendiktiergerät ausgebildet ist, für ein in einer in das Gerät einsetzbaren Kassette 2 untergebrachtes Magnetband 3, das in der Kassette zwischen einem Abwickelkern 4 und einem Aufwickelkern 5 verläuft. Die Kassette 2 ist in Fig.1 mit strichpunktierten Linien schematisch dargestellt. Mit dem Diktiergerät 1 sind Diktaten entsprechende Sprachsignale auf dem Magnetband 3 aufzeichenbar. Gemeinsam mit den Sprachsignalen sind mit dem Diktiergerät 1 auch Markierungen auf dem Magnetband 3 aufzeichenbar, die bestimmte Stellen der Diktate, nämlich die Enden der Diktate, kennzeichnen.

Zum Antreiben des Abwickelkernes 4 und des Aufwickelkernes 5 weist das Gerät 1 einen Abwickeldorn 6 und einen Aufwickeldorn 7 auf, die je mit einem Reibrad 8 bzw. 9 drehfest verbunden sind. Zum Antreiben der Reibräder 8 und 9 ist ein Motor 10 vorgesehen, der aus einer Steuer- und Regelschaltung 11 gespeist wird, mit der die Drehrichtung und die Drehzahl des Motors 10 festlegbar ist. Solche Steuer- und Regelschaltungen sind aus bestehenden Diktiergeräten bekannt und deshalb hier nicht im Detail dargestellt, weil ihr Aufbau im Zusammenhang mit der vorliegenden Erfindung nicht wesentlich ist. Der Motor 10 treibt über eine Pese 12 ein auf einem verschwenkbaren Träger 13 mit einer Welle 14 drehbar gelagertes Zwischenrad 15 an. Die Welle 14 bildet zugleich eine Antriebswelle für die beiden Reibräder 8 und 9, mit denen die Antriebswelle 14 durch Verschwenken des Trägers 13 wahlweise umfangsseitig in kraftschlüssige Antriebsverbindung bringbar ist.

Weiters weist das Gerät 1 ein eingebautes Mikrofon 16 auf, an das über einen normalerweise geschlossenen Schalter 17 eine Aufzeichnungssignalverarbeitungsschaltung 18 angeschlossen ist, die ausgangsseitig mit einem Magnetkopf 19 verbunden ist, mit dem die den Diktaten entsprechenden Sprachsignale in einer Betriebsart "Aufzeichnen" auf dem Magnetband 3 aufzeichenbar sind. Zum Einschalten der Betriebsart "Aufzeichnen" weist das Gerät 1 eine Taste 20 auf, bei deren Betätigung, wie dies schematisch mit strichlierten Linien angedeutet ist, ein Schalter 21 zum Ansteuern der Steuer- und Regelschaltung 11 für den Motor 10 und ein weiterer Schalter 22 zum Ansteuern der Aufzeichnungssignalverarbeitungsschaltung 18 geschlossen werden und der Träger 13 mit der Antriebswelle 14 zum Reibrad 9 hin verstellt wird. Durch Schließen des Schalters 21 wird die Steuer- und Regelschaltung 11 so angesteuert, daß sie den Motor 10 in einer Weise speist, daß derselbe über die Pese 12, das Zwischenrad 15 und die Antriebswelle 14 das Reibrad 9 und damit den Aufwickeldorn 5 mit einer vorgegebenen, konstanten ersten Drehzahl in der mit einem Pfeil 23 angegebenen Richtung antreibt, wie dies in Fig. 1 angegeben ist. Durch Schließen des Schalters 22 wird die Aufzeichnungssignalverarbeitungsschaltung 18 aktiviert, so daß sie dann ihr vom Mikrofon 16 über den Schalter 17 zugeführte Sprachsignale verarbeitet und dem Magnetkopf 19 zum Aufzeichnen auf dem über den Aufwickeldorn 7 angetriebenen Magnetband 3 zuführt, wobei das Magnetband 3 in Richtung des Pfeiles 24 an dem Magnetkopf 19 und an einem in Laufrichtung des Magnetbandes vor dem Magnetkopf 19 angeordneten, im wesentlichen durch einen Permanentmagneten gebildeten Löschmagnetkopf 25 entlang bewegt wird.

Weiters weist das Gerät 1 einen Oszillator 26 auf, der zum Erzeugen eines sinusförmigen Markiersignales S₁ mit einer vorgegebenen Frequenz f₁ von 40 Hz vorgesehen ist. Durch Betätigen einer Markiertaste 27 wird ein Schalter 28 geschlossen, wodurch der Oszillator 26 für eine vorgegebene Zeitdauer T₁ von beispielsweise 600 msec eingeschaltet wird, wobei dann der Oszillator 26 ein Markiersignal S₁ an den Magnetkopf 19 abgibt, der dieses als Markierung M₁ auf dem Magnetband 3 aufzeichnet. Beim Betätigen der Markiertaste 27 wird der Schalter 17 geöffnet, wodurch erreicht wird, daß an der Stelle des Magnetbandes 3, wo eine Markierung M₁ aufgezeichnet wird, kein Sprachsignal aufgezeichnet wird.

In Fig.2 ist schematisch ein Teil eines Magnetbandes 3 dargestellt, auf dem in einer Spur 29 zwei Diktate aufgezeichnet sind, deren Enden je mit einer Markierung M₁ gekennzeichnet sind. Jede dieser Markierungem M₁ besteht aus dem sinusförmigen Markiersignal S₁ mit der Frequenz f₁ von 40 Hz und mit der Dauer T₁ von 600 msec, wie dies in Fig.3 angegeben ist. In diesem Fall besteht daher jedes Markiersignal S₁ aus vierundzwanzig (24) Perioden. Die Markierungen M₁ sind in diesem Fall in derselben Spur wie die Sprachsignale aufgezeichnet. Die aufgezeichneten Sprachsignale liegen dabei, wie dies bei solchen Diktiergeräten üblich ist, in einem Frequenzbereich zwischen etwa 200 Hz und 6 kHz, so daß die Frequenz des Markiersignals S₁ von 40 Hz deutlich außerhalb des Frequenzbereiches der aufgezeichneten Sprachsignale liegt. Es sei erwähnt, daß die Markierungen M₁ nicht in derselben Spur wie die Sprachsignale aufgezeichnet sein müssen, sondern auch in einer separaten Spur aufgezeichnet werden können.

Die Fig.4 zeigt schematisch einen Teil eines Auswerte-Diktiergerätes 30, das beispielsweise als Tischdiktiergerät ausgebildet ist und das zum Wiedergeben von auf dem Magnetband 3 aufgezeichneten Sprachsignalen dient, wobei diese von einer Schreibkraft niedergeschrieben werden können. Das Gerät 30 enthält ein erfindungsgemäßes System 31 zum Auswerten von Markierungen, wie sie mit einem Gerät gemäß Fig.1 auf dem Magnetband 3 aufgezeichnet worden sind. Das System 31 zum Auswerten der Markierungen ist nachfolgend noch detailliert beschrieben.

Das Gerät 30 weist ebenso wie das Gerät gemäß Fig.1 einen Abwickeldorn 6 und einen Aufwickeldorn 7 auf, die je mit einem Reibrad 8 bzw. 9 drehfest verbunden sind. Ebenso ist ein Motor 10 vorgesehen, der aus einer Steuer- und Regelschaltung 11 gespeist wird und der über eine Pese 12 ein Zwischenrad 15 antreibt, das mit einer Welle 14 auf einem verschwenkbaren Träger 13 drehbar gelagert ist, wobei die Welle 14 zugleich eine Antriebswelle für die beiden Reibräder 8 und 9 bildet. Zum Wiedergeben der auf dem Magnetband 3 in diesem Fall in derselben Spur gespeicherten Sprachsignale und Markiersignale in einer Betriebsart "Wiedergeben" ist ein Magnetkopf 19 vorgesehen. Zum Einschalten der Betriebsart "Wiedergeben" weist das Gerät 30 eine Taste 32 auf. Durch Betätigen der Taste 32 wird, wie dies in Fig.4 schematisch mit strichlierten Linien angedeutet ist, ein Schalter 33 zum Ansteuern der Steuer- und Regelschaltung 11 geschlossen und der Träger 13 mit der Antriebswelle 14 zum Reibrad 9 hin verstellt. Durch Schließen des Schalters 33 wird die Steuer- und Regelschaltung 11 für den Motor 10 so angesteuert, daß sie den Motor 10 in einer Weise speist, daß derselbe über die Pese 12, das Zwischenrad 15 und die Antriebswelle 14 das Reibrad 9 und damit den Aufwickeldorn 7 mit derselben vorgegebenen konstanten ersten Drehzahl wie beim Aufzeichnen von Sprachsignalen und Markiersignalen in der mit dem Pfeil 23 angegebenen Richtung antreibt, wie dies in Fig.4 angegeben ist. Auf diese Weise wird das Magnetband 3 in der Betriebsart "Wiedergeben" ebenfalls ausschließlich über den hiebei mit der konstanten ersten Drehzahl angetriebenen Aufwickeldorn 7 und den Aufwickelkern 5 angetrieben, wobei das Magnetband 3 in Richtung des Pfeiles 24 an dem Magnetkopf 19 entlang bewegt wird. Hiebei werden die vom Magnetkopf 19 abgetasteten Signale einer Wiedergabesignalverarbeitungsschaltung 34 zugeführt, die einen Lautsprecher 35 zur akustischen Wiedergage der aufgezeichneten Diktate speist.

Wie erwähnt, enthält das Gerät 30 ein System 31 zum Auswerten von auf dem Magnetband 3 aufgezeichneten Markierungen M₁, um diese Markierungen und folglich die damit gekennzeichneten Enden der Diktate einfach und schnell auffinden zu können. Zum Einschalten einer Betriebsart "Auswerten" weist das Gerät 30 eine Taste 36 auf. Durch Betätigen der Taste 36 werden, wie dies in Fig.4 schematisch mit strichlierten Linien angedeutet ist, ein Schalter 37 und ein Schalter 38 geschlossen und der Träger 13 mit der Antriebswelle 14 zum Reibrad 8 hin verstellt. Durch Schließen des Schalters 37 wird die Steuer- und Regelschaltung 11 für den Motor 10 so angesteuert, daß sie den Motor 10 in einer Weise speist, daß derselbe über die Pese 12, das Zwischenrad 15 und die Antriebswelle 14 das Reibrad 8 und damit den Abwickeldorn 6 in der mit einem Pfeil 39 angegebenen Richtung mit einer vorgegebenen konstanten zweiten Drehzahl antreibt, die einen zwanzigfach höheren Wert aufweist als die erste Drehazhl, mit der der Aufwickeldorn 7 beim Aufzeichnen und Wiedergeben angetrieben wird. Auf diese Weise wird das Magnetband 3 beim Auswerten der Markierungen ausschließlich über den Abwickeldorn 6 und den Abwickelkern 4 angetrieben, so daß beim Auswerten der Markierungen das Magnetband 3 in der entgegengesetzten Richtung wie beim Aufzeichnen der Markierungen, also entgegen der Richtung des Pfeiles 24, an dem Magnetkopf 19 entlang bewegt wird, wobei das Magnetband 3 beim Auswerten der Markierungen aufgrund der zwanzigfach höheren Drehzahl des Abwickeldornes 6 auch eine höhere Fortbewegungsgeschwindigkeit als beim Aufzeichnen aufweist. Dabei nimmt die Fortbewegungsgeschwindigkeit des Magnetbandes 3 beim Auswerten der Markierungen mit wachsendem Wickeldurchmesser am Abwickelkern 4 zu, wogegen beim Aufzeichnen der Markierungen die Fortbewegungsgeschwindigkeit des Magnetbandes mit wachsendem Wickeldurchmesser am Aufwickelkern 5 zunimmt. Durch die höhere Geschwindigkeit des Magnetbandes beim Auswerten der Markierungen gegenüber der Geschwindigkeit beim Aufzeichnen der Markierungen kommt es zu einer Frequenztransponierung der aufgezeichneten Markiersignale beim Auswerten derselben, wobei aufgrund der gegensinnigen Geschwindigkeitszunahme des Magnetbandes beim Auswerten der Markierungen gegenüber der Geschwindigkeitszunahme beim Aufzeichnen der Markierungen diese Frequenztransponierung über die Gesamtlänge des Magnetbandes sich ändert. Beispielsweise werden die auf dem Magnetband aufgezeichneten Markiersignale S₁ mit der Frequenz von 40 Hz beim Auswerten aufgrund der sich ändernden Frequenztransponierung als frequenztransponierte Markiersignale in einem Frequenzbereich von 300 Hz bis 2000 Hz wiedergegeben. Es sei erwähnt, daß der Antrieb des Magnetbandes 3 zum Auswerten von Markierungen auch über den Aufwickeldorn 7 erfolgen kann, der dann beispielsweise ebenfalls mit gegenüber dem Aufzeichnen zwanzigfach höherer Drehzahl angetrieben wird. Dabei kommt es dann auch zu einer Frequenztransponierung der wiedergegebenen Markiersignale, die aber über die Gesamtlänge des Magnetbandes konstant bleibt.

Durch Betätigen der Taste 36 wird, wie erwähnt, der Schalter 38 geschlossen. Hierdurch werden die vom Magnetband 3 mit dem Magnetkopf 19 wiedergegebenen Signale, in diesem Fall also Sprachsignale und Markiersignale, einer Verstärkerstufe 40 zugeführt. Die Ausgangssignale der verstärkerstufe 40 werden einem Impulsformer 41 zugeleitet, der an seinem Ausgang impulsförmige Ausgangssignale abgibt, die einer Frequenzvergleichseinrichtung 42 an einem Eingang 43 derselben zugeführt werden. Die Frequenzvergleichseinrichtung 42 ist in vorliegendem Fall vorteilhafterweise einfach mit einem Mikroprozessor gebildet, der eine Vielzahl von Aufgaben im Gerät erfüllt, auf die aber nicht eingegangen wird, da sie im Zusammenhang mit der vorliegenden Erfindung nicht wesentlich sind. Im vorliegenden Zusammenhang dient der Mikroprozessor 42 als Frequenzvergleichseinrichtung zum Vergleichen der jeweiligen Frequenz der mit dem Magnetkopf 19 wiedergegebenen, dem Eingang 43 als impulsförmige Signale zugeführten frequenztransponierten Signale mit einer Referenzfrequenz, wobei der Mikroprozessor 42 bei Erfüllung einer vorgegebenen Vergleichsbedingung ein das Vorliegen einer Markierung signalisierendes Signal an einem Ausgang 44 abgibt. Durch dieses Signal am Ausgang 44 wird beispielsweise eine Leuchtdiode 45 für eine vorgegebene Zeitdauer zum Leuchten gebracht, wodurch das Auffinden einer Markierung optisch angezeigt wird. Dieses Signal am Ausgang 44 kann aber auch auf akustische Weise angezeigt werden oder auch der Steuer- und Regelschaltung 11 für den Motor 10 zugeführt werden, wobei beim Auftreten dieses Signales die Steuer- und Regelschaltung 11 die Speisung des Motors 10 abschaltet, so daß dann der Motor 10 stillgesetzt und der Antrieb des Magnetbandes 3 beim Auffinden einer Markierung beendet wird.

Das System 31 zum Auswerten der Markierungen M₁ weist nunmehr einen mit dem Aufwickeldorn 7 gekoppelten Drehzahlgeber 46 auf. Der Drehzahlgeber 46 weist eine gezahnte Scheibe 47 auf, die vorteilhafterweise einfach unmittelbar mit dem Aufwickeldorn 7 drehfest verbunden ist. Die Scheibe 47 kann aber auch, wie dies in Fig.4 mit einer strichpunktierten Linie angegeben ist, über eine Antriebsverbindung 48, beispielsweise eine Pese, mit dem Aufwickeldorn 7 gekoppelt sein. Die gezahnte Scheibe 47 wirkt mit ihren Zähnen mit einem symbolisch dargestellten fotoelektrischen Abtaster 49 des Drehzahlgebers 46 zusammen. Beim Antreiben der Scheibe 47 unterbrechen ihre Zähne periodisch einen Lichtstrahl im Abtaster 49, wodurch dieser ein periodisches Drehzahlsignal mit einer der Drehzahl des Aufwickeldornes 7 und damit des Aufwickelkernes 5 proportionalen Frequenz abgibt. Die Ausbildung des Drehzahlgebers 46 ist dabei so getroffen, daß er für den Fall, daß der Aufwickeldorn 7 vom Motor 10 her mit der ersten vorgegebenen Drehzahl angetrieben wird, wie dies beim Aufzeichnen der Fall ist, ein Drehzahlsignal mit einer vorgegebenen Frequenz f_{G} abgibt, die in einem vorgegebenen Verhältnis zur Frequenz f₁ von 40 Hz des Markiersignals S₁ steht. Es ist somit die Gleichung f_{G}=k.f₁ erfüllt, wobei k ein bestimmer Faktor ist. In der Praxis kann beispielsweise die Frequenz f_{G} gleich 20 Hz sein, so daß dann der Faktor k gleich 0,5 ist, weil die Frequenz f₁ des Markiersignals S₁ mit 40 Hz gewählt wurde. Anstelle eines fotoelektrischen Drehzahlgebers kann auch ein kapazitiv, induktiv oder auf andere Weise wirksamer Drehzahlgeber vorgesehen sein.

Da der Drehzahlgeber 46 mit dem Aufwickeldorn 7 gekoppelt ist, der beim Aufzeichnen der Markierungen M₁ vom Motor 10 mit der konstanten ersten Drehzahl angetrieben wird, wird beim Antreiben des Abwickeldornes 6 vom Motor 10 her, wie dies beim Auswerten der Markierungen M₁ bei vorliegendem Gerät 30 der Fall ist, die Frequenz des mit dem Drehzahlgeber 46 erzeugten Drehzahlsignals derselben Frequenztransponierung unterworfen wie die vom Magnetkopf 19 wiedergegebenen Signale, also auch die Markiersignale S₁. Wenn daher beim Auswerten die mit dem Magnetkopf 19 wiedergegebenen frequenztransponierten Signale frequenzmäßig mit dem frequenztransponierten Drehzahlsignal des Drehzahlgebers 46 verglichen werden, hat die auf die beiden frequenztransponierten Signale in gleicher Weise ausgeübte Frequenztransponierung keinen Einfluß auf den Frequenzvergleich. Der Frequenzvergleich zwischen diesen beiden frequenztransponierten Signalen ist also unabhängig von der ausgeübten Frequenztransponierung. In Ausnützung dieser Erkenntnis wird das Drehzahlsignal des mit dem Aufwickeldorn 7 gekoppelten Drehzahlgebers 46 über einen Verstärker 50 und einen Impulsformer 51 als impulsförmiges Signal dem die Frequenzvergleichseinrichtung bildenden Mikroprozessor 42 an einem weiteren Eingang 52 desselben zugeführt. In dem Mikroprozessor 42 bildet nunmehr die jeweilige Frequenz des frequenztransponierten Drehzahlsignals die Referenzfrequenz und der Mikroprozessor 42 vergleicht die als Referenzfrequenz herangezogene jeweilige Frequenz des Drehzahlsignales mit der jeweiligen Frequenz der mit dem Magnetkopf 19 wiedergegebenen Signale, also der frequenztransponierten Sprachsignale und der frequenztransponierten Markiersignale, deren Frequenz immer außerhalb des Frequenzbereiches der frequenztransponierten Sprachsignale liegt.

Im folgenden ist anhand der Fig.5 ein Programmablauf beschrieben, der in dem Mikroprozessor 42 in der Betriebsart "Auswerten" zum Auswerten der Markierungen abgearbeitet wird. Das Einschalten der Betriebsart "Auswerten" wird dem Mikroprozessor 42 durch Betätigen der Taste 36 zum Einschalten der Betriebsart "Auswerten" gemeldet, wie dies in Fig.4 mit einer strichlierten Linie angedeutet ist.

Nach dem Einschalten der Betriebsart "Auswerten" wird der Programmablauf beim Block 53 gestartet. Beim nachfolgenden Block 54 wird ein interner Zeitzähler Z_{Z} auf den Wert Null gesetzt. Beim nachfolgenden Block 55 wird ein Periodenzähler Z_{P} auf den Wert Null gesetzt. Danach wird beim Block 56 die jeweilige Dauer T₂ einer Periode des vom Drehzahlgeber 46 abgegebenen, dem Eingang 52 des Mikroprozessors 42 zugeführten impulsförmigen frequenztransponierten Drehzahlsignals ermittelt und in einem Register R₁ gespeichert. Danach wird beim Block 57 aus der ermittelten jeweiligen Periodendauer T₂ des frequenztransponierten Drehzahlsignales ein Toleranzfenster mit einem oberen Periodendauergrenzwert T₃ und einem unteren Periodendauergrenzwert T₄ errechnet. Der obere Periodendauergrenzwert T₃ wird dabei beispielsweise gemäß der Gleichung T₃=k.T₂.1,1 und der untere Periodendauergrenzwert T₄ wird dabei beispielsweise gemäß der Gleichung T₄=k.T₂.0,9 errechnet, wobei der obere Periodendauergrenzwert T₃ in einem Register R₂ und der untere Periodendauergrenzwert T₄ in einem Register R₃ gespeichert werden. Der Faktor k ist dabei durch das Frequenzverhältnis f_{G}:f₁ festgelegt, wie dies vorstehend bereits erläutert wurde. Danach wird beim Block 58 die jeweilige Dauer T₅ einer Periode der mit dem Magnetkopf 19 wiedergegebenen, dem Eingang 43 des Mikroprozessors 42 zugeführten frequenztransponierten Signale ermittelt und in einem Register R₄ gespeichert.

Danach werden beim Block 59 die beiden ermittelten jeweiligen Periodendauern T₂ und T₅ gemäß einer vorgegebenen Vergleichsbedingung für die beiden Periodendauern verglichen. Diese vorgegebene Vergleichsbedingung ist in dem Mikroprozessor 42 so festgelegt, daß die ermittelte jeweilige Periodendauer T₅ der mit dem Magnetkopf 19 wiedergegebenen Signale zwischen den beiden aus der ermittelten jeweiligen Periodendauer T₂ des Drehzahlsignales errechneten Periodendauergrenzwerten T₃ und T₄ liegen muß. Es muß also in diesem Fall die Vergleichsbedingung k.T₂.0,9<T₅<k.T₂.1,1 erfüllt sein. Durch das Berechnen eines Toleranzfensters wird eine gegenüber Toleranzen des Drehzahlgebers und Toleranzen der Frequenz der wiedergegebenen frequenztransponierten Markiersignale unempfindliche Auswertung erreicht. Wenn die vorgenannte Vergleichsbedingung nicht erfüllt ist, wenn also vom Magnetkopf 19 ein Sprachsignal, das eine gegenüber der Periodendauer des Markiersignales unterschiedliche Periodendauer aufweist, oder überhaupt kein Signal bzw. nur Rauschsignale wiedergegeben werden, dann wird beim Block 60 dieser Programmablauf beendet.

Wenn hingegen die beim Block 59 überprüfte Vergleichsbedingung erfüllt ist, also erstmals eine Periode eines frequenztransponierten wiedergegebenen Markiersignals S₁ festgestellt wurde, dann wird beim Block 61 geprüft, ob der Zählerstand des Periodenzählers Z_{P} den Wert Null aufweist. Wenn dies der Fall ist, wird danach beim Block 62 der interne Zeitzähler Z_{z} gestartet, der daraufhin entsprechend der ablaufenden Zeit automatisch inkrementiert wird. Nach dem Block 62 wird der Programmablauf beim Block 63 fortgesetzt, was auch dann der Fall ist, wenn beim Block 61 festgestellt wird, daß der Zählerstand des Periodenzählers Z_{P} vom Wert Null abweicht. Dies bedeutet, daß der Zeitzähler Z_{Z} nur bei Vorliegen des Zählerstandes Null im Periodenzähler Z_{P}, also nach dem erstmaligen Feststellen einer Periode eines frequenztransponierten wiedergegebenen Markiersignales S₁, gestartet wird. Beim Block 63 wird der Periodenzähler Z_{P} inkrementiert. Der Periodenzähler Z_{P} zählt auf diese weise, wie oft die beim Block 59 überprüfte Vergleichsbedingung durch die ermittelten jeweiligen Periodendauern T₂ und T₅ erfüllt ist, oder mit anderen Worten ausgedrückt, wieviele Perioden eines frequenztransponierten wiedergegebenen Markiersignales S₁ festgestellt wurden. Beim nachfolgenden Block 64 wird geprüft, ob der Zählerstand im Periodenzähler Z_{P} größer als ein vorgegebener Wert n ist. Beispielsweise wird der Wert n im vorliegenden Fall mit n=20 gewählt. Dies bedeutet, daß die Vergleichsbedingung für mindestens zwanzig (20) Perioden von den vierundzwanzig (24) aufgezeichneten Perioden eines Markiersignales S₁ erfüllt sein muß. Auf diese Weise wird der Auswertevorgang unempfindlich gegenüber kurzzeitig am Eingang 43 des Mikroprozessors 42 auftretenden Störsignalen, die eine im Frequenzbereich der frequenztransponierten wiedergegebenen Markiersignale liegende Frequenz aufweisen und daher eine Markierung vortäuschen könnten. Solange der Wert n nicht größer als zwanzig (20) ist, wird nachfolgend beim Block 65 geprüft, ob der Zählerstand des Zeitzählers Z_{Z} zumindest einen Wert aufweist, der der längstmöglichen Dauer eines frequenztransponierten wiedergegebenen Markiersignales S₁ entspricht. Wenn dies nicht der Fall ist, wird der Programmablauf beim Block 56 fortgesetzt und gegebenenfalls wieder bis zum Block 64 durchlaufen.

Wenn beim Block 64 festgestellt wird, daß der Zählerstand im Periodenzähler Z_{P} größer als der vorgegebene Wert n ist, was bedeutet, daß die beim Block 59 überprüfte Vergleichsbedingung zumindest zwanzigmal erfüllt wurde, also mindestens zwanzig Perioden eines frequenztransponierten wiedergegebenen Markiersignales S₁ festgestellt wurden, dann wird der Programmablauf beim Block 66 fortgesetzt. Beim Block 66 gibt der Mikroprozessor 42 an seinem Ausgang 44 für eine vorgegebene Zeitdauer T₆ ein das Vorliegen einer Markierung M₁ signalisierendes Signal ab, das die Leuchtdiode 45 für die Zeitdauer T₆ zum Aufleuchten bringt, was dem Benutzer das Auffinden einer Markierung M₁ signalisiert. Der Mikroprozessor 42 kann beim Block 66 auch intern an einer bestimmten Speicherstelle einen digitalen Kennwert für eine Markierung gemeinsam mit einem digitalen Positionswert, der dem Zählerstand eines Bandlängenzählers beim Auffinden der Markierung entspricht, abspeichern, wobei der Kennwert gemeinsam mit dem Positionswert das Vorliegen einer Markierung an der durch den Zählerstand des Bandlängenzählers angegebenen Stelle des Magnetbandes angibt. Danach wird beim Block 67 der Programmablauf beendet.

Wenn beim Block 65 festgestellt wird, daß der Zählerstand des Zeitzählers Z_{Z} bereits einen Wert, der zumindest der längstmöglichen Dauer eines frequenztransponierten wiedergegebenen Markiersignales S₁ entspricht, erreicht hat, obwohl zuvor beim Block 64 festgestellt wurde, daß die beim Block 59 überprüfte Vergleichsbedingung noch nicht ausreichend oft erfüllt ist, dann liegt keine Markierung vor, und es wird der Programmablauf beim Block 68 beendet.

In Fig.6 ist ein Magnetband 3 dargestellt, auf dem in einer Spur 29 drei Diktate und drei symbolisch angedeutete unterschiedliche Markierungen M₁, M₂ und M₃ aufgezeichnet sind. Jede Markierung M₁ kennzeichnet dabei ein Ende eines hinsichtlich der Auswertung ohne Priorität, also ohne Vorrang, zu behandelnden Diktates. Jede Markierung M₂ kennzeichnet dabei eine Diktatstelle, an der beim Auswerten eine Korrektur des Diktates durchzuführen ist. Jede Markierung M₃ kennzeichnet das Ende eines hinsichtlich der Auswertung mit Priorität, also mit Vorrang, zu behandelnden Diktates.

Wie in Fig.7 schematisch dargestellt ist, besteht jede Markierung M₁, wie dies auch schon aus Fig.3 ersichtlich ist, nur aus einem ersten sinusförmigen Markiersignal S₁ mit der Frequenz f₁ von 40 Hz und mit der Dauer T₁ von 600 msec. Jede Markierung M₂ besteht aus dem ersten sinusförmigen Markiersignal S₁ mit der Frequenz f₁ von 40 Hz und mit der Dauer T₁ von 600 msec und aus einem zweiten sinusförmigen Markiersignal S₂ mit einer Frequenz f₂ von 1500 Hz und mit der Dauer T₁ von 600 msec. Jede Markierung M₃ besteht aus dem ersten sinusförmigen Markiersignal S₁ mit der Frequenz f₁ von 40 Hz und mit der Dauer T₁ von 600 msec und dem zweiten sinusförmigen Markiersignal S₂ mit der Frequenz f₂ von 1500 Hz und mit einer Dauer T₁/2 von 300 msec.

Die Fig.8 zeigt ein Gerät 69 mit einem System 70 zum Auswerten der drei vorstehend angeführten Markierungen M₁, M₂ und M₃. Beim Gerät 69 ist der an den Ausgang der Verstärkerstufe 40 angeschlossene Impulsformer 41 also Schmitt-Trigger ausgebildet, der eine obere Grenzfrequenz von etwa 2,5 kHz aufweist, so daß über denselben nur die den aufgezeichneten Markiersignal S₁ mit der Frequenz von 40 Hz entsprechenden, frequenztransponierten wiedergegebenen Markiersignale, deren Frequenzen stets unterhalb von 2,5 kHz liegen, dem Eingang 43 des Mikroprozessors 42 zugeführt werden. An den Ausgang der Verstärkerstufe 40 ist ferner ein Hochpaß 71 angeschlossen, der einer untere Grenzfrequenz von etwa 10 kHz aufweist, so daß dieser Hochpaß die den aufgezeichneten Markiersignalen S₁ mit der Frequenz von 40 Hz entsprechenden, frequenztransponierten wiedergegebenen Markiersignale nicht durchläßt, jedoch alle anderen frequenztransponierten wiedergegebenen Signale durchläßt, also auch die den aufgezeichneten Markiersignalen S₂ mit der Frequenz von 1500 Hz entsprechenden, frequenztransponierten wiedergegebenen Markiersignale. An den Hochpaß 71 ist ein als Gleichrichter ausgebildeter Amplitudendetektor 72 angeschlossen, dem ein Schwellwertschalter 73 nachgeschaltet ist, dessen Ausgang mit einem weiteren Eingang 74 des Mikroprozessors 42 verbunden ist.

Anhand der Fig.9 ist im folgenden ein Programmablauf beschrieben, der in dem Mikroprozessor 42 des Gerätes 69 gemäß Fig.8 in der Betriebsart "Auswerten" abgearbeitet wird. Nach dem Einschalten der Betriebsart "Auswerten", was dem Mikroprozessor beim Betätigen der Taste 36 gemeldet wird, wird der Programmablauf gemäß Fig.9 beim Block 75 gestartet. Beim nachfolgenden Block 76 wird ein interner Zeitzähler Z_{Z} auf den Wert Null gesetzt. Beim nachfolgenden Block 77 wir ein Periodenzähler Z_{P} auf den Wert Null gesetzt. Beim nachfolgenden Block 78 wird ein weiterer Zähler Z_{S} auf den Wert Null gesetzt. Beim nachfolgenden Block 79 wird ein weiterer Periodenzähler Z_{F} auf den Wert Null gesetzt. Beim nachfolgenden Block 80 wird analog wie beim Block 56 gemäß Fig.5 die jeweilige Dauer T₂ einer Periode des vom Drehzahlgeber 46 abgegebenen, dem Eingang 52 des Mikroprozessors 42 zugeführten impulsförmigen frequenztransponierten Drehzahlsignales ermittelt und in einem Register R₁ gespeichert. Danach wird analog wie beim Block 57 gemäß Fig.5 beim Block 81 aus der ermittelten jeweiligen Periodendauer T₂ des frequenztransponierten Drehzahlsignales ein Toleranzfenster mit einem oberen Periodendauergrenzwert T₃ und einem unteren Periodendauergrenzwert T₄ errechnet, wobei der obere Periodendauergrenzwert T₃ in einem Register R₂ und der untere Periodendauergrenzwert T₄ in einem Register R₃ gespeichert werden. Danach wird analog wie beim Block 58 gemäß Fig.5 beim Block 82 die jeweilige Dauer T₅ einer Periode der mit dem Magnetkopf wiedergegebenen, dem Eingang 43 des Mikroprozessors 42 zugeführten frequenztransponierten Signale ermittelt und in einem Register R₄ gespeichert. Danach werden analog wie beim Block 59 gemäß Fig.5 beim Block 83 die ermittelten jeweiligen Periodendauern T₂ und T₅ gemäß der Vergleichsbedingung k.T₂.0,9<T₅<k.T₂.1,1 miteinander verglichen.

Wenn die beim Block 83 überprüfte Vergleichsbedingung erfüllt ist, also erstmals eine Periode eines frequenztransponierten wiedergegebenen Markiersignals S₁ festgestellt wurde, dann wird danach beim Block 84 geprüft, ob der Zählerstand des Periodenzählers Z_{P} den Wert Null aufweist. Wenn dies der Fall ist, wird danach beim Block 85 der interne Zeitzähler Z_{Z} gestartet, der daraufhin entsprechend der ablaufenden Zeit automatisch inkrementiert wird. Nach dem Block 85 wird der Programmablauf beim Block 86 fortgesetzt, was auch dann der Fall ist, wenn beim Block 84 festgestellt wird, daß der Zählerstand des Periodenzählers Z_{P} vom Wert Null abweicht. Dies bedeutet, daß der Zeitzähler Z_{Z} nur bei Vorliegen des Zählerstandes Null im Periodenzähler Z_{P}, also nur nach dem erstmaligen Feststellen einer Periode eines frequenztransponierten wiedergegebenen Markiersignals S₁, gestartet wird. Der Periodenzähler Z_{P} zählt auf diese Weise, wieviele Perioden eines frequenztransponierten wiedergegebenen Markiersignales S₁ festgestellt wurden. Beim nachfolgenden Block 87 wird geprüft, ob am Eingang 74 des Mikroprozessors 42 ein Signal vorliegt. Dies bedeutet, daß geprüft wird, ob während des Auftretens einer Periode eines frequenztransponierten wiedergegebenen Markiersignales S₁ auch ein frequenztransponiertes wiedergegebenes Markiersignal S₂ vorliegt. Wenn dies der Fall ist, wird nachfolgend beim Block 88 der weitere Zähler Z_{S} inkrementiert. Dies bedeutet, daß der Zähler Z_{S} die Anzahl der Perioden des frequenztransponierten wiedergegebenen Markiersignales S₁ feststellt, während denen auch ein frequenztransponiertes wiedergegebenes Markiersignal S₂ vorliegt. Nach dem Block 88 wird der Programmablauf beim Block 89 fortgesetzt, was auch dann der Fall ist, wenn die Prüfung beim Block 87 negativ ausfällt, also kein Signal am Eingang 74 des Mikroprozessors 42 vorliegt. Beim Block 89 wird geprüft, ob der Zählerstand im Periodenzähler Z_{P} größer als ein vorgegebener Wert n ist, wobei der Wert n wieder mit n=20 gewählt ist, wie dies analog beim Block 64 gemäß Fig.5 der Fall ist. Solange der Wert n nicht größer als zwanzig (20) ist, wird nachfolgend analog wie beim Block 65 gemäß Fig.5 beim Block 90 geprüft, ob der Zählerstand des Zeitzählers Z_{Z} zumindest einen Wert aufweist, der der längstmöglichen Dauer eines frequenztransponierten wiedergegebenen Markiersignales S₁ entspricht. Wenn dies der Fall ist, obwohl zuvor beim Block 89 festgestellt wurde, daß die beim Block 83 überprüfte Vergleichsbedingung noch nicht ausreichend oft erfüllt ist, dann liegt keine Markierung vor, und es wird der Programmablauf beim Block 91 beendet. Wenn die Prüfung beim Block 90 aber negativ ausfällt, wird der Programmablauf beim Block 80 fortgesetzt und beginnend mit dem Block 80 neuerlich durchlaufen.

Wenn beim Block 89 festgestellt wird, daß der Zählerstand des Periodenzählers Z_{P} größer als n=20 ist, dann wird danach beim Block 92 geprüft, ob der Zählerstand des weiteren Zählers Z_{S} kleiner als der Wert 4 ist, ob also nur während weniger als vier Perioden, insbesondere in keiner Periode, des frequenztransponierten wiedergegebenen Markiersignales S₁ ein frequenztransponiertes wiedergegebenes Markiersignal S₂ vorhanden war. Wenn dies der Fall ist, dann liegt eine Markierung M₁ vor, und es gibt beim Block 93 der Mikroprozessor 42 an einem Ausgang 94 desselben für eine vorgegebene Zeitdauer T₆ ein das Vorliegen einer Markierung M₁ Signalisierendes Signal ab, das beispielsweise eine an den Ausgang 94 angeschlossene Leuchtdiode zum Aufleuchten bringt. Nach dem Block 93 wird dieser Programmablauf beim Block 91 beendet.

Wenn die beim Block 92 durchgeführte Prüfung negativ ausfällt, dann wird beim Block 95 geprüft, ob der Zählerstand des weiteren Zählers Z_{S} kleiner als der Wert 16 ist, ob also während mindestens vier und während höchstens fünfzehn Perioden des frequenztransponierten wiedergegebenen Markiersignales S₁ auch ein frequenztransponiertes wiedergegebenes Markiersignal S₂ am Eingang 74 des Mikroprozessors 42 aufgetreten ist. Wenn dies der Fall ist, dann liegt eine Markierung M₃ vor, und es gibt beim Block 96 der Mikroprozessor 42 an einem Ausgang 97 desselben für eine vorgegebene Zeitdauer T₆ ein das Vorliegen einer Markierung M₃ signalisierendes Signal ab, das beispielsweise eine an den Ausgang 97 angeschlossene Leuchtdiode zum Aufleuchten bringt. Nach dem Block 96 wird der Programmablauf beim Block 91 beendet.

Wenn die Prüfung beim Block 95 negativ ausfällt, der Zählerstand des weiteren Zählers Z_{S} also mindestens 16 oder größer ist, also während mindestens sechzehn Perioden des frequenztransponierten wiedergegebenen Markiersignales S₁ auch ein frequenztransponiertes wiedergegebenes Markiersignal S₂ am Eingang 74 des Mikroprozessors 42 aufgetreten ist, dann liegt eine Markierung M₂ vor, und es gibt beim Block 98 der Mikroprozessor 42 an einem Ausgang 99 desselben für eine vorgegebene Zeitdauer T₆ ein das Vorliegen einer Markierung M₂ signalisierendes Signal ab, das beispielsweise eine an den Ausgang 99 angeschlossene Leuchtdiode zum Aufleuchten bringt. Nach dem Block 98 wird der Programmablauf beim Block 91 beendet.

Wenn beim Block 83 festgestellt wird, daß die Vergleichsbedingung k.T₂.0,9<T₅<k.T₂.1,1 für die beiden ermittelten jeweiligen Periodendauern T₂ und T₅ nicht erfüllt ist, dann wird der Programmablauf beim Block 100 fortgesetzt. Beim Block 100 wird geprüft, ob der Zählerstand des Periodenzählers Z_{P} gleich dem Wert Null ist. Wenn dies der Fall ist, also der Zählerstand des Periodenzählers Z_{P} den Wert Null aufweist, was bedeutet, daß zuvor noch keine Periode eines frequenztransponierten wiedergegebenen Markiersignales S₁ festgestellt wurde, dann wird der programmablauf beim Block 91 beendet. Wenn der Zählerstand des Periodenzählers Z_{P} aber vom Wert Null abweicht, also zuvor zumindest eine Periode eines frequenztransponierten wiedergegebenen Markiersignales S₁ festgestellt wurde, dann wird der Programmablauf beim Block 101 fortgesetzt. Beim Block 101 wird der weitere Periodenzähler Z_{F} inkrementiert. Dies bedeutet, daß der weitere Periodenzähler Z_{F} zählt, wie oft die beim Block 83 überprüfte Vergleichsbedingung für die beiden jeweiligen Periodendauern T₂ und T₅ nicht erfüllt ist, wenn sie zuvor zumindest einmal schon erfüllt war. Danach wird beim Block 102 geprüft, ob der Zählerstand des weiteren Periodenzählers Z_{F} größer als ein vorgegebener Wert m ist. Beispielsweise ist der Wert m mit m=4 gewählt. Wenn dies nicht der Fall ist, wird der Programmablauf beim Block 80 fortgesetzt. Es kann somit während der Detektion einer Markierung die Vergleichsbedingung aufgrund von Störungen viermal nicht erfüllt sein und trotzdem wird der Detektionsvorgang für diese Markierung fortgesetzt. Wenn der Zählerstand des weiteren Periodenzählers Z_{F} aber größer als der Wert m ist, dann kann angenommen werden, daß keine Markierung vorliegt, und es wird der Programmablauf beim Block 91 beendet.

Sowohl bei dem System gemäß dem Ausführungsbeispiel nach Fig.4 als auch bei dem System gemäß dem Ausführungsbeispiel nach Fig.8 wird das Auftreten einer Markierung M₁, M₂ bzw. M₃ an sich durch Frequenzvergleich der jeweiligen Frequenz des frequenztransponierten Markiersignals, das dem aufgezeichneten Markiersignal S₁ mit der Frequenz von 40 Hz entspricht, mit der jeweiligen Frequenz des vom Drehzahlgeber 46 abgegebenen frequenztransponierten Drehzahlsignals detektiert, wobei aufgrund der Tatsache, daß sowohl die Markiersignale als auch des Drehzahlsignal derselben Frequenztransponierung unterworfen werden, dieser Frequenzvergleich vorteilhafterweise unabhängig von der Frequenztransponierung ist. Auf diese Weise ist vorteilhafterweise erreicht, daß der Antrieb das Magnetbandes beim Auswerten der Markierungen auf jede beliebige Weise erfolgen kann, also sowohl durch Antreiben des Abwickelkernes als auch des Aufwickelkernes. Bei dem System gemäß dem Ausführungsbeispiel nach Fig.8 wird zum Unterscheiden der Markierungen, die sich durch die Zeitdauer des Markiersignales S₂ mit der Frequenz von 1500 Hz voneinander unterscheiden, das Auftreten an sich und die Auftrittszeitdauer des frequenztransponierten wiedergegebenen Markiersignales, das dem aufgezeichneten Markiersignal S₂ mit der Frequenz von 1500 Hz entspricht, in Relation zur Auftrittszeitdauer des frequenztransponierten wiedergegebenen Markiersignales, das dem aufgezeichneten Markiersignal S₁ mit der Frequenz von 40 Hz entspricht, festgestellt. Das Feststellen des Auftretens eines frequenztransponierten wiedergegebenen Markiersignales S₂ erfolgt dabei mit Hilfe eines durch eine Gleichrichterstufe gebildeten Amplitudendetektors. Selbstverständlich könnte das Feststellen des Auftretens eines frequenztransponierten wiedergegebenen Markiersignales S₂ ebenso, wie dies für das frequenztransponierte wiedergegebene Markiersignal S₁ durchgeführt wird, durch Frequenzvergleich der jeweiligen Frequenz des frequenztransponierten wiedergegebenen Markiersignales S₂ mit der jeweiligen Frequenz des vom Drehzahlgeber abgegebenen frequenztransponierten Drehzahlsignales erfolgen.

## Patentansprüche

1. System zum Auswerten von Markierungen (M), die je aus der Aufzeichnung mindestens eines Markiersignals mit einer vorgegebenen Frequenz bestehen und die gemeinsam mit Informationen entsprechenden Informationssignalen auf einem Magnetband (3) aufgezeichnet sind, das zwischen einem ersten Wickelkern (4) und einem zweiten Wickelkern (5) verläuft und das beim Aufzeichnen ausschließlich über den hierbei mit konstanter Drehzahl als Aufwickelkern angetriebenen zweiten Wickelkern (5) angetrieben wird, und die bestimmte Stellen der Informationen kennzeichnen, das einen ersten Wickeldorn (6) und einen zweiten Wickeldorn (7) jeweils zum Antreiben des ersten (6) und des zweiten Wickelkernes (7), mindestens einen Magnetkopf (19) zum Wiedergeben der aufgezeichneten Signale und eine Frequenzvergleichseinrichtung (42) zum Vergleichen der jeweiligen Frequenz der mit dem Magnetkopf (19) wiedergegebenen, der Frequenzvergleichseinrichtung (42) zugeführten Signale mit einer Referenzfrequenz aufweist, die bei Erfüllung einer vorgegebenen Vergleichsbedingung ein das Vorliegen einer Markierung (M) signalisierendes Signal abgibt, dadurch gekennzeichnet, daß mit dem zweiten Wickeldorn (7) ein Drehzahlgeber (46) gekoppelt ist, der ein Drehzahlsignal mit einer der Drehzahl des zweiten Wickelkernes (5) proportionalen Frequenz abgibt, und daß das Drehzahlsignal der Frequenzvergleichseinrichtung (42) zugeführt wird, in der die Frequenz des Drehzahlsignales die Referenzfrequenz bildet und die die jeweilige Frequenz des Drehzahlsignales mit der jeweiligen Frequenz der mit dem Magnetkopf (19) wiedergegebenen Signale vergleicht.

2. System nach Anspruch 1, dadurch gekennzeichnet, daß die Frequenzvergleichseinrichtung (42) mit einem Mikroprozessor gebildet ist, der zum Vergleichen der jeweiligen Frequenz des Drehzahlsignales mit der jeweiligen Frequenz der mit dem Magnetkopf (19) wiedergegebenen Signale die jeweilige Periodendauer des Drehzahlsignales und die jeweilige Periodendauer der mit dem Magnetkopf (19) wiedergegebenen Signale ermittelt und danach die beiden ermittelten Periodendauern gemäß einer vorgegebenen Vergleichsbedingung für diese beiden Periodendauern vergleicht und bei Erfüllung dieser Vergleichsbedingung das das Vorliegen einer Markierung signalisierende Signal abgibt.

3. System nach Anspruch 2, dadurch gekennzeichnet, daß der Mikroprozessor aus der ermittelten Periodendauer des Drehzahlsignales ein Toleranzfenster mit einem unteren Periodendauergrenzwert und einem oberen Periodendauergrenzwert errechnet und daß die vorgegebene Vergleichsbedingung in dem Mikroprozessor so festgelegt ist, daß die ermittelte jeweilige Periodendauer der mit dem Magnetkopf (19) wiedergegebenen Signale zwischen diesen beiden Periodendauergrenzwerten liegen muß.

4. System nach Anspruch 2 oder 3, dadurch gekennzeichnet, daß der Mikroprozessor nur bei mehrmaliger Erfüllung der vorgegebenen Vergleichsbedingung für die beiden Periodendauern das das Vorliegen einer Markierung signalisierende Signal abgibt.

## Claims

1. A system for detecting marks (M) which each comprise the recording of at least one marking signal of a given frequency and which together with information signals corresponding to information are recorded on a magnetic tape (3) which extends between a first reel hub (4) and a second reel hub (5) and which during recording is driven only via the second reel hub (5) which is then driven as a take-up reel hub with a constant rotational speed, which marking signals identify specific items of the information, the system comprising a first mandril (6) and a second mandril (7) for driving the first reel hub (6) and the second reel hub (7), at least one magnetic head (19) for reproducing the recorded signals and a frequency-comparison device (42) for comparing the instantaneous frequency of the signals reproduced by means of the magnetic head (19) and applied to the frequency-comparison device (42) with a reference frequency, which device when a given relational condition is satisfied supplies a signal indicating the presence of a mark (M), characterised in that a tachometer (46) is coupled to the second mandril (7) to supply a tacho-signal having a frequency proportional to the rotational speed of the second mandril (5), and in that the tacho-signal is applied to the frequency-comparison device (42), in which the frequency of the tacho-signal forms the reference frequency and which compares the instantaneous frequency of the tacho-signal with the instantaneous frequency of the signals reproduced by means of the magnetic head (19).

2. A system as claimed in Claim 1, characterised in that the frequency comparison device (42) is formed by means of a microprocessor which for comparing the instantaneous frequency of the tacho-signal with the instantaneous frequency of the signals reproduced by means of the magnetic head (19) determines the instantaneous period of the tacho-signal and the instantaneous period of the signals reproduced by means of the magnetic head (19) and subsequently compares the determined periods in conformity with a given relational condition for said two periods and, if said relational condition is satisfied, supplies a signal indicating the presence of a mark.

3. A system as claimed in Claim 2, characterised in that the microprocessor computes a tolerance window having a lower period-limit and an upper period-limit from the detected period of the tacho-signal, and in that the given relational condition is defined in the microprocessor in such a way that the detected instantaneous period of the signals reproduced by means of the magnetic head (19) should be situated between said two period limits.

4. A system as claimed in Claim 2 or 3, characterised in that the microprocessor only supplies the signal indicating the presence of a mark if the relational condition for the two periods has been satisfied recurrently.

## Revendications

1. Système d'évaluation de repères (M), qui sont constitués chacun de l'enregistrement d'au moins un signal de repérage d'une fréquence prédéterminée et qui sont enregistrés conjointement avec des signaux d'information correspondant à des informations sur une bande magnétique (3) qui défile entre un premier noyau de bobine (4) et un deuxième noyau de bobine (5) et qui, lors de l'enregistrement, est exclusivement entraînée via le deuxième noyau de bobine (5) entraîné à vitesse constante comme noyau de bobine d'envidage, et qui caractérisent des endroits déterminés des informations, le système comportant un premier mandrin de bobinage (6) et un deuxième mandrin de bobinage (7) pour entraîner respectivement le premier noyau de bobine (4) et le deuxième noyau de bobine (5), au moins une tête magnétique (19) pour reproduire les signaux enregistrés et un dispositif de comparaison de fréquence (42) pour comparer la fréquence respective des signaux reproduits par la tête magnétique (19) et acheminés au dispositif de comparaison de fréquence (42) à une fréquence de référence, ledit dispositif délivrant un signal signalant la présence d'un repère (M) lorsqu'une condition de comparaison prédéterminée a été satisfaite, caractérisé en ce qu'au deuxième mandrin de bobinage (7) est accouplé un transmetteur de vitesse de rotation (46), qui délivre un signal de vitesse de rotation dont la fréquence est proportionnelle à la vitesse de rotation du deuxième noyau de bobine (5), et en ce que le signal de vitesse de rotation est acheminé au dispositif de comparaison de fréquence (42), dans lequel la fréquence du signal de vitesse de rotation forme la fréquence de référence et qui compare la fréquence respective du signal de vitesse de rotation à la fréquence respective des signaux reproduits par la tête magnétique (19).

2. Système selon la revendication 1, caractérisé en ce que le dispositif de comparaison de fréquence (42) est formé par un microprocesseur, qui détermine, pour comparer la fréquence respective du signal de vitesse de rotation à la fréquence respective des signaux reproduits par la tête magnétique (19), la durée de période respective du signal de vitesse de rotation et la durée de période respective de signaux reproduits par la tête magnétique (19) et compare ensuite les deux durées de périodes selon une condition de comparaison prédéterminée pour ces deux durées de périodes et, lorsque la condition de comparaison est satisfaite, délivre le signal signalant la présence d'un repère.

3. Système selon la revendication 2, caractérisé en ce que le microprocesseur calcule à partir de la durée de la période déterminée du signal de vitesse de rotation une fenêtre de tolérance présentant une valeur limite de durée de période inférieure et une valeur limite de durée de période supérieure et en ce que la condition de comparaison prédéterminée est établie, de telle sorte que la durée de période respective déterminée des signaux reproduits par la tête magnétique (19) se situe nécessairement entre ces deux valeurs limites de durée de période.

4. Système selon la revendication 2 ou 3, caractérisé en ce que le microprocesseur ne délivre le signal signalant la présence d'un repère que lorsque la condition de comparaison prédéterminée a été satisfaite à plusieurs reprises pour les deux durées de périodes.
